# EUROPÄISCHE PATENTSCHRIFT

(11) **EP 0 968 891 B1**
(45) Veröffentlichungstag und Bekanntmachung des Hinweises auf die Patenterteilung: **13.04.2005**
(21) Anmeldenummer: 99109568.8
(22) Anmeldetag: 14.05.1999
(51) Int. Cl.: B60R 25/00, B60R 13/10, G07B 15/00

(54) **Fahrzeug mit einem Identifikationselement**
Vehicle with an identification device
Véhicule avec un dispositif d'identification

(30) Priorität: 04.07.1998 DE 19830024
(43) Veröffentlichungstag der Anmeldung: 05.01.2000
(73) Patentinhaber: Siemens Aktiengesellschaft, 80333 München (DE)
(72) Erfinder: Kober, Rainer, 64297 Darmstadt (DE)

(56) Entgegenhaltungen:
- EP-A- 0 617 384
- DE-A- 3 445 401
- DE-A- 4 201 894
- DE-A- 19 508 693
- DE-A- 19 541 027
- GB-A- 2 247 096
- US-A- 5 744 223
- US-A- 5 781 106

## Beschreibung

Die Erfindung betrifft ein Fahrzeug mit einem Identifikationselement, welches an einem sichtbaren Bereich des Fahrzeuges unlösbar angebracht ist, wobei das Identifikationselement zur Speicherung verschlüsselter, fahrzeugspezifischer Daten ausgeführt ist.

Ein solches Identifikationselement wird bei heutigen Kraftfahrzeugen dazu verwendet, potentielle Diebe abzuschrecken. Hierzu wird die Fahrgestellnummer des Kraftfahrzeuges an einer gut sichtbaren Stelle an dem Fahrzeug angebracht. Diese zur Identifikation des Fahrzeuges und damit zur Ermittlung des Eigentümers geeignete Fahrgestellnummer wird beispielsweise in die Scheiben eingraviert oder geätzt und somit unlösbar und unveränderlich mit dem Fahrzeug verbunden. Häufig wird diese Nummer an mehreren Scheiben angebracht, so dass der Diebstahl des Fahrzeuges immer auch mit einem Austausch der entsprechenden Scheiben verbunden ist, sofern das Fahrzeug wieder zugelassen bzw. an einen ahnungslosen Erwerber weiterveräußert werden soll. Diese Abschreckungsmaßnahme hat sich bei Fahrzeugen der unteren Preisklasse bewährt, da bei diesen Fahrzeugen der zum Austausch der Scheiben erforderliche Aufwand im Verhältnis zum Wert des Fahrzeuges relativ hoch ist. Es hat sich aber gezeigt, dass die Abschreckungswirkung mit steigendem Wert des Fahrzeuges abnimmt, da hierbei trotz des erforderlichen Austauschs der Scheiben dennoch ein Gewinn zu erzielen ist. Es ist dabei für den Dieb relativ einfach, die Austauschscheibe mit einer gefälschten Fahrgestellnummer zu versehen, da diese lediglich einheitlich zu sein braucht und mit den Fahrzeugpapieren übereinstimmen muss. Für einen gutgläubigen Erwerber ist es dann nicht mehr möglich, die wahre Identität des Fahrzeuges zu erkennen.

Es ist auch bereits daran gedacht worden, die Nummer an einem Karosserieelement, beispielsweise am Dach des Fahrzeuges, unveränderlich anzubringen, was aber bei den Käufern der Fahrzeuge aufgrund des nachteiligen optischen Erscheinungsbildes auf Ablehnung stößt. Daher hat sich diese Vorgehensweise trotz der deutlich höheren Abschreckungswirkung bisher nicht durchsetzen können.

Aus der GB 22 47 096 A ist ein Adapter für eine separate IC-Karte eines automatischen Straßengebührensystems bekannt, wobei die IC-Karte eine von dem Adapter lesbare Codenummer aufweist. Durch ein Übertragungsteil des Adapters ist die Codenummer an Empfangsstationen entlang der Straße sendbar.

Aus der DE 195 08 693 A ist ein Verfahren zur Identifizierung von Fahrzeugen der eingangs genannten Art und aus der US 57 44 223 A eine Kennzeichnung von Fahrzeugen zur Erschwerung von Diebstahl und unbefugter Veräußerung der eingangs genannten Art bekannt.

Aus der EP 0 617 384 A ist ein Wertkartenleser zum Erheben einer Straßenbenutzungsgebühr bekannt, der in einem Kraftfahrzeug fest eingebaut ist und in den eine separate Wertkarte zum Abbuchen eines bestimmten Betrages einführbar ist. Dabei kann die Wertkarte eine bestimmte Codezahl aufweisen und das Kraftfahrzeug nur startbar sein, wenn eine Wertkarte mit der bestimmten Codezahl in den Wertkartenleser eingeführt ist.

Der Erfindung liegt das Problem zugrunde, ein Identifikationselement der eingangs genannten Art so zu gestalten, dass dessen Fälschung unmöglich oder zumindest wesentlich erschwert ist.

Dieses Problem wird erfindungsgemäß dadurch gelöst, das Identifikationselement derart mit einem Steuerelement des Fahrzeuges verbunden ist, dass bei einer Veränderung oder Manipulation des Identifikationselementes ein Signal an das Steuerelement auslösbar ist, welches diese Veränderung dauerhaft und unlöschbar speichert.

Bei einem Werkstattaufenthalt wird das Signal an ein Diagnosegerät übermittelt. Bei einem gefälschten Identifikationselement ist es daher nicht möglich, das Fahrzeug in einer Fachwerkstatt reparieren zu lassen, ohne dass die entsprechenden Daten an die Werkstatt übermittelt werden.

Diese fahrzeugspezifischen Daten sind für den Berechtigten leicht zu entschlüsseln und enthalten neben Fahrgestellnummer und verschlüsselten Ausstattungsmerkmalen auch Daten über unveränderliche oder nur mit erheblichem Aufwand veränderliche Merkmale des Fahrzeuges, wie beispielsweise die Anzahl der Türen, Ausstattung mit Cabriolet- oder Schiebedach etc. Diese Daten sind mit den Daten des Halters oder Eigentümers in einem zentralen Rechner, beispielsweise beim Kraftfahrzeugbundesamt, verknüpft. Falls dieses Identifikationselement nach einem Diebstahl unverändert beibehalten wird, ist der ursprüngliche Besitzer leicht anhand der codierten Daten zu ermitteln. Wird das Identifikationselement nach einem Diebstahl verändert, so ist es für den Unberechtigten nicht möglich, die fahrzeugspezifischen, unveränderlichen Merkmale des Fahrzeuges korrekt zu verschlüsseln, so dass bei einer Überprüfung der verschlüsselten Daten durch die Polizei oder andere Berechtigte sofort die mangelnde Übereinstimmung dieser Daten mit dem Fahrzeug offensichtlich wird. Durch diese fälschungssichere Codierung der Daten wird eine wesentlich wirkungsvollere Abschreckung bei potentiellen Dieben erreicht, wobei der Aufwand zur Herstellung und Montage für den Hersteller sehr gering ist.

Die verschlüsselten Daten könnten hierzu aus einer alphanumerischen Codierung bestehen, die zunächst abgelesen wird und anschließend beispielsweise mittels eines Rechenprogrammes entschlüsselt wird.

Eine besonders vorteilhafte Weiterbildung der Erfindung ist jedoch dann gegeben, wenn das Identifikationselement maschinenlesbar ausgeführt ist. Hierdurch können die von dem Identifikationselement gespeicherten Daten wesentlich schneller von einer rechnergestützten Leseeinrichtung erfasst und ausgewertet werden. Es lassen sich somit innerhalb kurzer Zeit eine Vielzahl von Fahrzeugen überprüfen, wobei sogar eine Kontrolle eines bewegten Fahrzeuges mittels stationär angebrachter Leseeinrichtungen, wie sie heute schon zur Gebührenabrechnung bei mautpflichtigen Autobahnen im Einsatz sind, möglich ist. Zugleich ist die Fälschung solcher Identifikationselemente vergleichsweise schwierig, so dass eine weitere Abschreckung erreicht wird.

Besonders einfach ist eine Ausführungsform der Erfindung dann gestaltet, wenn das Identifikationselement einen Barcode hat. Solche Barcodes sind seit langem bei unterschiedlichsten Verwendungszwecken bewährt und lassen sich zuverlässig erfassen. Ein zum Ablesen erforderlicher Scanner ist hierbei auch in einem problemlos zu transportierenden Format erhältlich, so dass eine solche Überprüfung schnell und einfach möglich ist.

Eine andere vorteilhafte Weiterbildung der Erfindung ist auch dann gegeben, wenn das Identifikationselement einen Magnetstreifen hat. Dieser lässt sich leicht mittels eines geeigneten Magnetstreifenlesegerätes erfassen und erlaubt die Speicherung auch großer Datenmengen. Hierbei kann der Berechtigte auch nachträglich die Codierung ändern, wie dies beispielsweise bei einer nachträglichen Änderung der Farbe erforderlich sein kann.

Günstig ist es, wenn das Steuerelement mit einer Wegfahrsperre des Fahrzeuges verbunden ist. Das Steuerelement kann dadurch bei einem entsprechenden Eingangssignal das Fahrzeug mittels der Wegfahrsperre stilllegen und dadurch als weitere abschreckende Maßnahme einem möglichen Diebstahl vorbeugen.

Ebenso ist eine besonders vorteilhafte Weiterbildung der Erfindung dadurch gegeben, dass das Steuerelement mit einer Türverriegelung des Fahrzeuges verbunden ist. Ein hierdurch erforderlicher Austausch der Schließanlage des Fahrzeuges ist mit so hohem Aufwand verbunden, dass das Fahrzeug einem erheblichen Wertverlust unterliegt. Ein Wiederverkauf des Fahrzeuges ist dadurch weitgehend ausgeschlossen.

Besonders sinnvoll ist die Erfindung auch dann ausgeführt, wenn das Identifikationselement einen Sender zur Abgabe eines Funksignales hat. Hierdurch kann das Abrufen der in dem Identifikationselement gespeicherten Daten auch über weite Entfernungen erfolgen. Die Auswertung der Daten kann dabei unbemerkt erfolgen, so dass die Suche nach dem Fahrzeug auch dann erfolgreich verläuft, wenn dieses unzugänglich abgestellt ist.

Günstig ist es auch, wenn das Identifikationselement an einem von einer Scheibe abgedeckten Karosserieelement angeordnet ist. Der Austausch von Karosserieelementen, insbesondere tragender Karosserieteile, ist nahezu unmöglich. Zugleich kann das Identifikationselement auch von außen eingesehen werden, wobei diese Anordnung unauffällig und ohne Störung des optischen Erscheinungsbildes des Fahrzeuges vorgenommen werden kann.

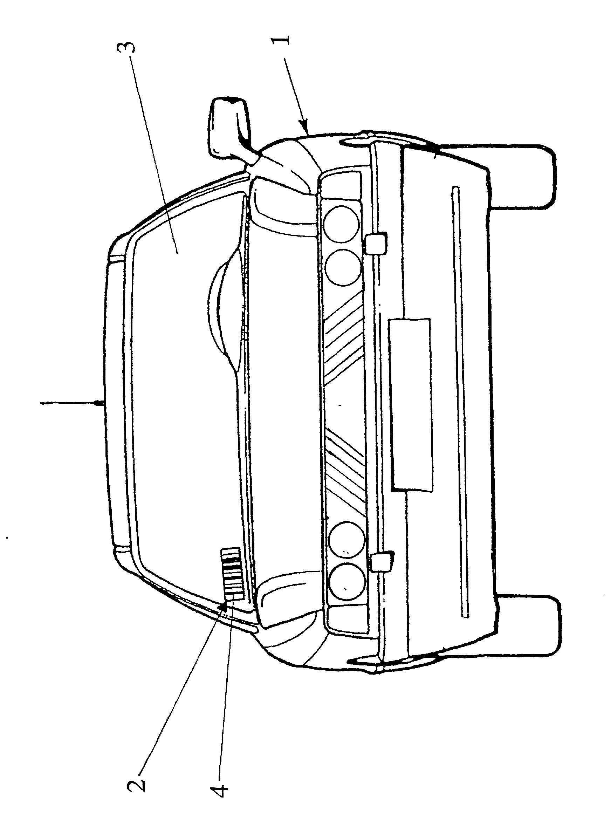

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt eine Vorderansicht eines Fahrzeuges 1 mit einem erfindungsgemäßen Identifikationselement 2. Dieses Identifikationselement 2 ist in einer unteren Ecke einer Scheibe 3 des Fahrzeuges 1 angeordnet und somit leicht von außen ablesbar. Das Identifikationselement 2 hat hierzu einen an sich bekannten Barcode 4, in dem wesentliche, unveränderliche Daten des Fahrzeuges 1 verschlüsselt gespeichert und mit der Scheibe 3 unlösbar verbunden sind. Das Identifikationselement 2 kann auch an einer anderen Position der Scheibe 3 angeordnet sein, sofern die Sicht des Fahrzeugführers dadurch nicht behindert wird. In ähnlicher Weise können auch die nicht dargestellten Seitenfenster des Fahrzeuges 1 mit dem gleichen Identifikationselement 2 ausgestattet sein.

## Patentansprüche

1. Fahrzeug mit einem Identifikationselement, welches an einem sichtbaren Bereich des Fahrzeuges unlösbar angebracht ist, wobei das Identifikationselement zur Speicherung verschlüsselter, fahrzeugspezifischer Daten ausgeführt ist, **dadurch gekennzeichnet, dass** das Identifikationselement (2) derart mit einem Steuerelement des Fahrzeuges (1) verbunden ist, dass bei einer Veränderung oder Manipulation des Identifikationselementes ein Signal an das Steuerelement auslösbar ist, welches diese Veränderung dauerhaft und unlöschbar speichert.

2. Fahrzeug nach Anspruch 1, **dadurch gekennzeichnet, dass** das Identifikationselement (2) maschinenlesbar ausgeführt ist.

3. Fahrzeug nach einem der vorhergehenden Ansprüche, **dadurch gekennzeichnet, dass** das Identifikationselement (2) einen Barcode (4) hat.

4. Fahrzeug nach einem der vorhergehenden Ansprüche, **dadurch gekennzeichnet, dass** das Identifikationselement (2) einen Magnetstreifen hat.

5. Fahrzeug nach einem der vorhergehenden Ansprüche, **dadurch gekennzeichnet, dass** das Steuerelement mit einer Wegfahrsperre des Fahrzeuges (1) verbunden ist.

6. Fahrzeug nach einem der Ansprüche 1 bis 4, **dadurch gekennzeichnet, dass** das Steuerelement mit einer Türverriegelung des Fahrzeuges (1) verbunden ist.

7. Fahrzeug nach einem der vorhergehenden Ansprüche, **dadurch gekennzeichnet, dass** das Identifika-tionselement (2) einen Sender zur Abgabe eines Funksignales hat.

8. Fahrzeug nach einem der vorhergehenden Ansprüche, **dadurch gekennzeichnet, dass** das Identifikationselement (2) an einem von einer Scheibe (3) abgedeckten Karosserieelement angeordnet ist.

## Claims

1. Vehicle having an identification element which is non-detachably mounted on a visible area of the vehicle, wherein the identification element is designed to store encrypted, vehicle-specific data, **characterized in that** the identification element (2) is connected to a control element of the vehicle (1) in such a way that when the identification element changes or is manipulated it is possible to trigger a signal to the control element which permanently and non-erasably stores this change.

2. Vehicle according to Claim 1, **characterized in that** the identification element (2) is of machine-readable design.

3. Vehicle according to one of the preceding claims, **characterized in that** the identification element (2) has a bar-code (4).

4. Vehicle according to one of the preceding claims, **characterized in that** the identification element (2) has a magnetic strip.

5. Vehicle according to one of the preceding claims, **characterized in that** the control element is connected to an immobilizer of the vehicle (1).

6. Vehicle according to one of Claims 1 to 4, **characterized in that** the control element is connected to a door lock of the vehicle (1).

7. Vehicle according to one of the preceding claims, **characterized in that** the identification element (2) has a transmitter for emitting a radio signal.

8. Vehicle according to one of the preceding claims, **characterized in that** the identification element (2) is arranged on a bodywork element which is covered by a window-pane (3).

## Revendications

1. Véhicule avec un dispositif d'identification mis en place d'une façon indétachable à un endroit visible du véhicule, le dispositif d'identification étant destiné à mémoriser des données codées spécifiques au véhicule, **caractérisé par le fait que** le dispositif d'identification (2) est relié à un élément de commande du véhicule (1) de telle manière que, dans le cas d'une modification ou d'une manipulation du dispositif d'identification, un signal peut être déclenché et transmis à l'élément de commande, qui mémorise cette modification d'une façon permanente et ineffaçable.

2. Véhicule selon la revendication 1 **caractérisé par le fait que** le dispositif d'identification (2) est exécuté de telle sorte qu'il est lisible par machine.

3. Véhicule selon l'une des revendications précédentes **caractérisé par le fait que** le dispositif d'identification (2) comporte un code à barres (4).

4. Véhicule selon l'une des revendications précédentes **caractérisé par le fait que** le dispositif d'identification (2) comporte une bande magnétique.

5. Véhicule selon l'une des revendications précédentes **caractérisé par le fait que** l'élément de commande est relié à un système anti-démarrage électronique du véhicule (1).

6. Véhicule selon l'une des revendications 1 à 4 **caractérisé par le fait que** l'élément de commande est relié à un verrouillage des portes du véhicule (1).

7. Véhicule selon l'une des revendications précédentes **caractérisé par le fait que** le dispositif d'identification (2) comporte un émetteur permettant d'émettre un signal radio.

8. Véhicule selon l'une des revendications précédentes **caractérisé par le fait que** le dispositif d'identification (2) est mis en place sur un élément de carrosserie recouvert par une vitre (3).
